# EUROPEAN PATENT APPLICATION

(11) **EP 4 113 853 A1**
(43) Date of publication of application: **04.01.2023**
(21) Application number: 21774106.5
(22) Date of filing: 04.03.2021
(51) Int. Cl.: H04B 7/0413, H04W 72/00, H04W 72/04, H04W 76/27

(54) **SIGNAL TRANSMISSION METHOD AND APPARATUS**

(30) Priority: 25.03.2020 CN 202010217709
(71) Applicant: Huawei Technologies Co., Ltd., Shenzhen, Guangdong 518129 (CN)
(72) Inventor: LIU, Yun, Shenzhen, Guangdong 518129 (CN); XU, Haibo, Shenzhen, Guangdong 518129 (CN); WANG, Zhou, Shenzhen, Guangdong 518129 (CN)
(74) Representative: Maiwald GmbH
(86) International application number: PCT/CN2021/079149
(87) International publication number: WO 2021/190271

(57) **Abstract**

This application provides a signal transmission method and apparatus. In the method, a first terminal configures, for a second terminal, a first resource including at least one low-frequency resource or at least one low-frequency resource pool. After receiving the first resource configured by the first terminal, if the second terminal detects a beam failure, the second terminal determines a to-be-selected beam, and sends a beam failure recovery request to the first terminal on a low-frequency resource in the first resource, where the to-be-selected beam is a beam for signal transmission between the second terminal and the first terminal, and the beam failure recovery request is used to request beam failure recovery. In the method, because the second terminal sends the BFRQ by using the low-frequency resource, and a beam corresponding to the low-frequency resource is an omnidirectional beam, the first terminal can reliably receive the BFRQ, to improve beam failure recovery efficiency.

## Description

This application claims priority to Chinese Patent Application No. 202010217709.2, filed with the China National Intellectual Property Administration on March 25, 2020 and entitled "SIGNAL TRANSMISSION METHOD AND APPARATUS", which is incorporated herein by reference in its entirety.

### TECHNICAL FIELD

This application relates to the field of communications technologies, and in particular, to a signal transmission method and apparatus.

### BACKGROUND

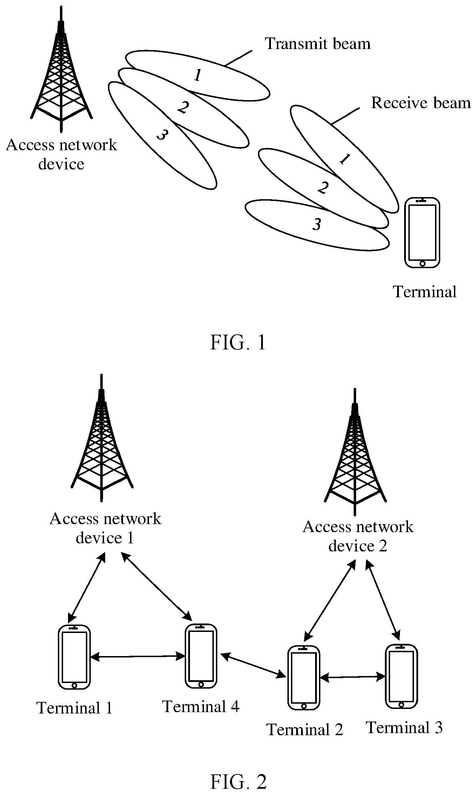

In an air interface multiple-input multiple-output (multiple-input multiple-output, MIMO) scenario, an access network device can send information by using different beams at different moments, so that terminals at different locations can receive information with high quality. For one piece of information, the terminal may select a receive beam that matches a transmit beam corresponding to the information to receive the information, to ensure signal received quality. For example, refer to FIG. 1. If an access network device sends information by using a transmit beam 2, a terminal receives the information by using a receive beam 2 that matches the transmit beam 2. In a specific implementation, the terminal may determine, through beam scanning, a receive beam that matches a transmit beam. In addition, each beam has a corresponding physical random access channel (physical random access channel, PRACH) resource.

In a process of communication between the terminal and the access network device, a channel between the terminal and the access network device may change when the terminal moves or an obstacle occurs between the terminal and the access network device. When a transmit beam cannot match a receive beam, channel quality is reduced. If the channel quality is reduced to a specific extent, transmission between the terminal and the access network device fails a plurality of times, that is, a beam failure occurs between the terminal and the access network device. To restore communication between the terminal and the access network device, beam failure recovery (beam failure recovery, BFR) needs to be performed.

Beam failure recovery is a mechanism used to perform beam recovery after a beam failure, and specifically includes the following four specific steps: (1) Beam failure detection: The terminal determines, based on a bit error rate by detecting a physical downlink control channel (physical downlink control channel, PDCCH), whether a beam failure occurs. (2) Identification of a to-be-selected beam: The terminal obtains reference signal received power (reference signal received power, RSRP) of each beam based on a reference signal (reference signal, RS) corresponding to each beam, and determines the to-be-selected beam based on a value of the RSRP, where the to-be-selected beam is used for subsequent communication between the terminal and the access network device. (3) Beam failure recovery request (beam failure recovery request, BFRQ) transmission: The terminal sends a BFRQ to the access network device on a PRACH resource that corresponds to the to-be-selected beam and that is configured by the access network device, where the BFRQ may indicate the to-be-selected beam. (4) The terminal monitors a response of the access network device to the BFRQ.

A problem of the beam failure recovery process is as follows: It is assumed that the terminal and the access network device originally communicate with each other by using a beam A, and the terminal selects the to-be-selected beam because a channel between the terminal and the access network device changes. The terminal sends the BFRQ on the PRACH resource corresponding to the to-be-selected beam, and the access network device may determine that a beam corresponding to the PRACH resource on which the BFRQ is sent is the to-be-selected beam. Before the terminal sends the BFRQ, the terminal cannot communicate with the access network device by using the to-be-selected beam. Therefore, to enable the access network device to receive the BFRQ, the terminal sends the BFRQ by using the beam A. However, because the channel between the terminal and the access network device has changed, the access network device may not receive the BFRQ. Consequently, the beam cannot be recovered, and beam failure recovery efficiency is reduced.

### SUMMARY

Embodiments of this application provide a signal transmission method and apparatus, to improve beam failure recovery efficiency.

To achieve the foregoing objective, embodiments of this application provide the following technical solutions.

According to a first aspect, a signal transmission method is provided, and including: A first terminal configures a first resource including at least one low-frequency resource or at least one low-frequency resource pool, and receives, from a second terminal on a low-frequency resource in the first resource, a beam failure recovery request used to request beam failure recovery. According to the method provided in the first aspect, when a beam failure occurs on the second terminal, if the first resource includes the at least one low-frequency resource, the second terminal may send the beam failure recovery request by using a low-frequency resource; or if the first resource includes the at least one low-frequency resource pool, the second terminal may select one low-frequency resource from a resource pool in the at least one low-frequency resource pool to send the beam failure recovery request. Because the second terminal sends the beam failure recovery request by using the low-frequency resource, and a beam corresponding to the low-frequency resource is an omnidirectional beam, the first terminal can reliably receive the beam failure recovery request, to improve beam failure recovery efficiency.

In a possible implementation, when the first resource includes the at least one low-frequency resource, the first resource further includes a beam identifier corresponding to the at least one low-frequency resource, and each beam identifier corresponds to one or more low-frequency resources in the first resource; or when the first resource includes the at least one low-frequency resource pool, the first resource further includes a beam identifier corresponding to the at least one low-frequency resource pool, and each beam identifier corresponds to one or more low-frequency resource pools in the first resource. In this possible implementation, the beam identifier corresponds to the low-frequency resource or the low-frequency resource pool, so that it is possible to determine a to-be-selected beam by using the low-frequency resource or the low-frequency resource pool.

In a possible implementation, the method further includes: When the first resource includes the at least one low-frequency resource, the first terminal determines a to-be-selected beam based on the low-frequency resource used by the second terminal to send the beam failure recovery request, where the to-be-selected beam is a beam for signal transmission between the second terminal and the first terminal. Alternatively, when the first resource includes the at least one low-frequency resource pool, the first terminal determines a to-be-selected beam based on a low-frequency resource pool to which the low-frequency resource used by the second terminal to send the beam failure recovery request belongs, where the to-be-selected beam is a beam for signal transmission between the second terminal and the first terminal. In this possible implementation, a method for determining the to-be-selected beam is provided.

In a possible implementation, the beam failure recovery request includes a beam identifier of a to-be-selected beam, and the to-be-selected beam is a beam for signal transmission between the second terminal and the first terminal. The method further includes: The first terminal determines the to-be-selected beam based on the beam identifier in the beam failure recovery request. In this possible implementation, another method for determining the to-be-selected beam is provided.

In a possible implementation, the beam failure recovery request includes a sequence corresponding to a beam identifier of a to-be-selected beam, and the to-be-selected beam is a beam for signal transmission between the second terminal and the first terminal. The method further includes: The first terminal determines the to-be-selected beam based on the sequence in the beam failure recovery request. In this possible implementation, still another method for determining the to-be-selected beam is provided.

In a possible implementation, that a first terminal configures a first resource includes: The first terminal broadcasts resource configuration information used to configure the first resource. Alternatively, the first terminal configures the first resource for the second terminal by using signaling, where the signaling is RRC signaling or SCI. In this possible implementation, two methods for configuring the first resource are provided.

In a possible implementation, the method further includes: The first terminal sends a beam failure recovery response to the second terminal on the to-be-selected beam. The first terminal transmits data to the second terminal by using the to-be-selected beam.

In a possible implementation, the method further includes: The first terminal obtains the first resource by applying to an access network device. In this possible implementation, a method for obtaining the first resource by the first terminal is provided.

In a possible implementation, the first resource is periodically distributed in time domain.

In a possible implementation, that a first terminal configures a first resource includes: The first terminal configures the first resource for the second terminal on a high-frequency resource. Alternatively, the first terminal obtains an identifier of the second terminal on a high-frequency resource, and sends, to the second terminal on a low-frequency resource, the resource configuration information used to configure the first resource, where the resource configuration information includes the identifier of the second terminal. Alternatively, the first terminal periodically sends SCI to the second terminal on a low-frequency resource, where the SCI is used to schedule the first resource. In this possible implementation, three methods for configuring the first resource are provided.

According to a second aspect, a signal transmission method is provided, and includes: A second terminal receives a first resource that includes at least one low-frequency resource or at least one low-frequency resource pool and that is configured by a first terminal. The second terminal detects a beam failure, and determines a to-be-selected beam, where the to-be-selected beam is a beam for signal transmission between the second terminal and the first terminal. The second terminal sends, to the first terminal on a low-frequency resource in the first resource, a beam failure recovery request used to request beam failure recovery. According to the method provided in the second aspect, when a beam failure occurs on the second terminal, if the first resource includes the at least one low-frequency resource, the second terminal may send the beam failure recovery request by using a low-frequency resource; or if the first resource includes the at least one low-frequency resource pool, the second terminal may select one low-frequency resource from a resource pool in the at least one low-frequency resource pool to send the beam failure recovery request. Because the second terminal sends the beam failure recovery request by using the low-frequency resource, and a beam corresponding to the low-frequency resource is an omnidirectional beam, the first terminal can reliably receive the beam failure recovery request, to improve beam failure recovery efficiency.

In a possible implementation, when the first resource includes the at least one low-frequency resource, the first resource further includes a beam identifier corresponding to the at least one low-frequency resource, and each beam identifier corresponds to one or more low-frequency resources in the first resource; or when the first resource includes the at least one low-frequency resource pool, the first resource further includes a beam identifier corresponding to the at least one low-frequency resource pool, and each beam identifier corresponds to one or more low-frequency resource pools in the first resource. In this possible implementation, the beam identifier corresponds to the low-frequency resource or the low-frequency resource pool, so that it is possible to determine a to-be-selected beam by using the low-frequency resource or the low-frequency resource pool.

In a possible implementation, when the first resource includes the at least one low-frequency resource, that the second terminal sends a beam failure recovery request to the first terminal on a low-frequency resource in the first resource includes: The second terminal sends the beam failure recovery request to the first terminal on a low-frequency resource corresponding to the to-be-selected beam. In this possible implementation, a method for determining the to-be-selected beam when the first resource includes the at least one low-frequency resource is provided.

In a possible implementation, when the first resource includes the at least one low-frequency resource and the to-be-selected beam corresponds to a plurality of low-frequency resources, that the second terminal sends a beam failure recovery request to the first terminal on a low-frequency resource in the first resource includes: The second terminal determines a low-frequency resource whose interference is lowest or whose interference is less than or equal to a first threshold in the plurality of low-frequency resources corresponding to the to-be-selected beam. The second terminal sends the beam failure recovery request to the first terminal on the low frequency resource whose interference is lowest or whose interference is less than or equal to the first threshold. In this possible implementation, a method for determining the to-be-selected beam when the first resource includes the at least one low-frequency resource and the to-be-selected beam corresponds to the plurality of low-frequency resources.

In a possible implementation, when the first resource includes the at least one low-frequency resource pool, that the second terminal sends a beam failure recovery request to the first terminal on a low-frequency resource in the first resource includes: The second terminal sends the beam failure recovery request to the first terminal on a low-frequency resource in a low-frequency resource pool corresponding to the to-be-selected beam. In this possible implementation, a method for determining the to-be-selected beam when the first resource includes the at least one low-frequency resource pool is provided.

In a possible implementation, when the first resource includes the at least one low-frequency resource pool, that the second terminal sends a beam failure recovery request to the first terminal on a low-frequency resource in the first resource includes: The second terminal determines a low-frequency resource whose interference is lowest or whose interference is less than or equal to a first threshold in a plurality of low-frequency resource pools corresponding to the to-be-selected beam. The second terminal sends the beam failure recovery request to the first terminal on the low frequency resource whose interference is lowest or whose interference is less than or equal to the first threshold. In this possible implementation, another method for determining the to-be-selected beam when the first resource includes the at least one low-frequency resource pool is provided.

In a possible implementation, the beam failure recovery request includes a beam identifier of the to-be-selected beam. In this possible implementation, another method for determining the to-be-selected beam is provided.

In a possible implementation, the beam failure recovery request includes a sequence corresponding to a beam identifier of the to-be-selected beam. In this possible implementation, another method for determining the to-be-selected beam is provided.

In a possible implementation, that a second terminal receives a first resource configured by a first terminal includes: The second terminal receives resource configuration information that is broadcast by the first terminal and that is used to configure the first resource. Alternatively, the second terminal receives the configured first resource from the first terminal by using signaling, where the signaling is RRC signaling or SCI. In this possible implementation, two methods for obtaining the configured first resource are provided.

In a possible implementation, the method further includes: The second terminal receives a beam failure recovery response from the first terminal on the to-be-selected beam. The second terminal transmits data to the first terminal by using the to-be-selected beam.

In a possible implementation, the method further includes: If the second terminal does not receive a beam failure recovery response from the first terminal, the second terminal reselects a low-frequency resource to send the beam failure recovery request.

In a possible implementation, the first resource is periodically distributed in time domain.

In a possible implementation, that a second terminal receives a first resource configured by a first terminal includes: The second terminal receives, on a high-frequency resource, the first resource configured by the first terminal. Alternatively, the second terminal receives, on a low-frequency resource, the resource configuration information that is sent by the first terminal and that is used to configure the first resource, where the resource configuration information includes an identifier of the second terminal. Alternatively, the second terminal periodically receives SCI from the first terminal on a low-frequency resource, where the SCI is used to schedule the first resource. In this possible implementation, three methods for obtaining the configured first resource are provided.

In a possible implementation, that the second terminal detects a beam failure includes: When the second terminal detects that a quantity of times that PSSCH, PSCCH, or PSBCH transmission fails is greater than or equal to a second threshold, the second terminal determines that the beam failure occurs. In this possible implementation, a plurality of methods for determining the beam failure are provided.

According to a third aspect, a signal transmission apparatus is provided, and includes a processing unit and a communications unit. The processing unit is configured to configure, by using the communications unit, a first resource including at least one low-frequency resource or at least one low-frequency resource pool. The processing unit is further configured to receive, from a second terminal on a low-frequency resource in the first resource by using the communications unit, a beam failure recovery request used to request beam failure recovery.

In a possible implementation, when the first resource includes the at least one low-frequency resource, the first resource further includes a beam identifier corresponding to the at least one low-frequency resource, and each beam identifier corresponds to one or more low-frequency resources in the first resource; or when the first resource includes the at least one low-frequency resource pool, the first resource further includes a beam identifier corresponding to the at least one low-frequency resource pool, and each beam identifier corresponds to one or more low-frequency resource pools in the first resource.

In a possible implementation, when the first resource includes the at least one low-frequency resource, the processing unit is further configured to determine a to-be-selected beam based on the low-frequency resource used by the second terminal to send the beam failure recovery request, where the to-be-selected beam is a beam for signal transmission between the second terminal and the apparatus. Alternatively, when the first resource includes the at least one low-frequency resource pool, the processing unit is further configured to determine a to-be-selected beam based on a low-frequency resource pool to which the low-frequency resource used by the second terminal to send the beam failure recovery request belongs, where the to-be-selected beam is a beam for signal transmission between the second terminal and the apparatus.

In a possible implementation, the beam failure recovery request includes a beam identifier of a to-be-selected beam, and the to-be-selected beam is a beam for signal transmission between the second terminal and the apparatus. The processing unit is further configured to determine the to-be-selected beam based on the beam identifier in the beam failure recovery request.

In a possible implementation, the beam failure recovery request includes a sequence corresponding to a beam identifier of a to-be-selected beam, and the to-be-selected beam is a beam for signal transmission between the second terminal and the apparatus. The processing unit is further configured to determine the to-be-selected beam based on the sequence in the beam failure recovery request.

In a possible implementation, the processing unit is specifically configured to: broadcast, by using the communications unit, resource configuration information used to configure the first resource; or configure the first resource for the second terminal by using the communications unit and signaling, where the signaling is RRC signaling or SCI.

In a possible implementation, the processing unit is further configured to: send a beam failure recovery response to the second terminal on the to-be-selected beam by using the communications unit; and transmit data to the second terminal by using the communications unit and the to-be-selected beam.

In a possible implementation, the processing unit is further configured to obtain, by using the communications unit, the first resource by applying to an access network device.

In a possible implementation, the first resource is periodically distributed in time domain.

In a possible implementation, the processing unit is specifically configured to: configure the first resource for the second terminal on a high-frequency resource by using the communications unit; or obtain an identifier of the second terminal on a high-frequency resource, and send, to the second terminal on a low-frequency resource by using the communications unit, the resource configuration information used to configure the first resource, where the resource configuration information includes the identifier of the second terminal; or periodically send SCI to the second terminal on a low-frequency resource by using the communications unit, where the SCI is used to schedule the first resource.

According to a fourth aspect, a signal transmission apparatus is provided, and includes a processing unit and a communications unit. The communications unit is configured to receive a first resource that includes at least one low-frequency resource or at least one low-frequency resource pool and that is configured by a first terminal. The processing unit is configured to determine a to-be-selected beam after detecting a beam failure, where the to-be-selected beam is a beam for signal transmission between the apparatus and the first terminal. The communications unit is further configured to send, to the first terminal on a low-frequency resource in the first resource, a beam failure recovery request used to request beam failure recovery.

In a possible implementation, when the first resource includes the at least one low-frequency resource, the first resource further includes a beam identifier corresponding to the at least one low-frequency resource, and each beam identifier corresponds to one or more low-frequency resources in the first resource; or when the first resource includes the at least one low-frequency resource pool, the first resource further includes a beam identifier corresponding to the at least one low-frequency resource pool, and each beam identifier corresponds to one or more low-frequency resource pools in the first resource.

In a possible implementation, when the first resource includes the at least one low-frequency resource, the communications unit is specifically configured to send the beam failure recovery request to the first terminal on a low-frequency resource corresponding to the to-be-selected beam.

In a possible implementation, when the first resource includes the at least one low-frequency resource and the to-be-selected beam corresponds to a plurality of low-frequency resources, the processing unit is further configured to determine a low-frequency resource whose interference is lowest or whose interference is less than or equal to a first threshold in the plurality of low-frequency resources corresponding to the to-be-selected beam; and the communications unit is specifically configured to send the beam failure recovery request to the first terminal on the low-frequency resource whose interference is lowest or whose interference is less than or equal to the first threshold.

In a possible implementation, when the first resource includes the at least one low-frequency resource pool, the communications unit is specifically configured to send the beam failure recovery request to the first terminal on a low-frequency resource in a low-frequency resource pool corresponding to the to-be-selected beam.

In a possible implementation, when the first resource includes the at least one low-frequency resource pool, the processing unit is further configured to determine a low-frequency resource whose interference is lowest or whose interference is less than or equal to a first threshold in a plurality of low-frequency resource pools corresponding to the to-be-selected beam; and the communications unit is specifically configured to send the beam failure recovery request to the first terminal on the low-frequency resource whose interference is lowest or whose interference is less than or equal to the first threshold.

In a possible implementation, the beam failure recovery request includes a beam identifier of the to-be-selected beam.

In a possible implementation, the beam failure recovery request includes a sequence corresponding to a beam identifier of the to-be-selected beam.

In a possible implementation, the communications unit is specifically configured to: receive resource configuration information that is broadcast by the first terminal and that is used to configure the first resource; or receive the configured first resource from the first terminal by using signaling, where the signaling is RRC signaling or SCI.

In a possible implementation, the communications unit is further configured to: receive a beam failure recovery response from the first terminal on the to-be-selected beam; and transmit data to the first terminal by using the to-be-selected beam.

In a possible implementation, if the communications unit does not receive a beam failure recovery response from the first terminal, the processing unit is further configured to reselect a low-frequency resource to send the beam failure recovery request.

In a possible implementation, the first resource is periodically distributed in time domain.

In a possible implementation, the communications unit is specifically configured to: receive, on a high-frequency resource, the first resource configured by the first terminal; or receive, on a low-frequency resource, the resource configuration information that is sent by the first terminal and that is used to configure the first resource, where the resource configuration information includes an identifier of the apparatus; or periodically receive SCI from the first terminal on a low-frequency resource, where the SCI is used to schedule the first resource.

In a possible implementation, the processing unit is specifically configured to: when detecting that a quantity of times that PSSCH, PSCCH, or PSBCH transmission fails is greater than or equal to a second threshold, determine that the beam failure occurs.

According to a fifth aspect, a signal transmission apparatus is provided, and includes a processor. The processor is connected to a memory, the memory is configured to store computer-executable instructions, and the processor executes the computer-executable instructions stored in the memory, to implement any method according to the first aspect. The memory and the processor may be integrated together, or may be independent components. If the memory and the processor are independent components, the memory may be located inside the signal transmission apparatus, or may be located outside the signal transmission apparatus.

In a possible implementation, the processor includes a logic circuit, and further includes at least one of an input interface and an output interface. The output interface is configured to perform a sending action in a corresponding method, and the input interface is configured to perform a receiving action in the corresponding method.

In a possible implementation, the signal transmission apparatus further includes a communications interface and a communications bus. The processor, the memory, and the communications interface are connected through the communications bus. The communications interface is configured to perform receiving and sending actions in the corresponding method. The communications interface may also be referred to as a transceiver. Optionally, the communications interface includes at least one of a transmitter and a receiver. In this case, the transmitter is configured to perform the sending action in the corresponding method, and the receiver is configured to perform the receiving action in the corresponding method.

In a possible implementation, the signal transmission apparatus exists in a product form of a chip.

According to a sixth aspect, a signal transmission apparatus is provided, and includes a processor. The processor is coupled to a memory, the memory is configured to store computer-executable instructions, and the processor executes the computer-executable instructions stored in the memory, to implement any method according to the second aspect. The memory and the processor may be integrated together, or may be independent components. If the memory and the processor are independent components, the memory may be located inside the signal transmission apparatus, or may be located outside the signal transmission apparatus.

In a possible implementation, the processor includes a logic circuit, and further includes at least one of an input interface and an output interface. The output interface is configured to perform a sending action in a corresponding method, and the input interface is configured to perform a receiving action in the corresponding method.

In a possible implementation, the signal transmission apparatus further includes a communications interface and a communications bus. The processor, the memory, and the communications interface are connected through the communications bus. The communications interface is configured to perform receiving and sending actions in the corresponding method. The communications interface may also be referred to as a transceiver. Optionally, the communications interface includes at least one of a transmitter and a receiver. In this case, the transmitter is configured to perform the sending action in the corresponding method, and the receiver is configured to perform the receiving action in the corresponding method.

In a possible implementation, the signal transmission apparatus exists in a product form of a chip.

According to a seventh aspect, a chip is provided, and includes a processor and an interface. The processor is coupled to a memory through the interface, and when the processor executes a computer program or instructions in the memory, any method according to the first aspect is performed.

According to an eighth aspect, a chip is provided, and includes a processor and an interface. The processor is coupled to a memory through the interface, and when the processor executes a computer program or instructions in the memory, any method according to the second aspect is performed.

According to a ninth aspect, a communications system is provided, and includes the signal transmission apparatus according to the third aspect and the signal transmission apparatus according to the fourth aspect.

According to a tenth aspect, a computer-readable storage medium is provided, and includes instructions. When the instructions are run on a computer, the computer is enabled to perform any method according to the first aspect or the second aspect.

According to an eleventh aspect, a computer program product including instructions is provided. When the instructions are run on a computer, the computer is enabled to perform any method according to the first aspect or the second aspect.

For technical effects brought by any implementation of the third aspect to the eleventh aspect, refer to technical effects brought by a corresponding implementation of the first aspect or the second aspect. Details are not described herein again.

It should be noted that various possible implementations of any one of the foregoing aspects may be combined provided that the solutions are not contradictory.

### BRIEF DESCRIPTION OF DRAWINGS

FIG. 1 is a schematic diagram of communication between an access network device and a terminal by using beams;
FIG. 2 is a schematic diagram of a network architecture according to an embodiment of this application;
FIG. 3 is a schematic diagram of subchannel distribution according to an embodiment of this application;
FIG. 4 is a schematic diagram of communication between terminals by using beams according to an embodiment of this application;
FIG. 5 is a schematic diagram of beam scanning according to an embodiment of this application;
FIG. 6 is an interaction flowchart of a signal transmission method according to an embodiment of this application;
FIG. 7 is a schematic diagram of determining a to-be-selected beam according to an embodiment of this application;
FIG. 8 is a schematic diagram of sending a BFRQ on a low-frequency resource according to an embodiment of this application;
FIG. 9 is a schematic diagram of beam failure recovery according to an embodiment of this application;
FIG. 10 is a schematic diagram of configuring a correspondence between a low-frequency resource or a low-frequency resource pool and a beam identifier according to an embodiment of this application;
FIG. 11 is a schematic diagram of a sequence corresponding to a beam according to an embodiment of this application;
FIG. 12 is a schematic diagram of a sequence corresponding to a beam and a PRB corresponding to the sequence according to an embodiment of this application;
FIG. 13 is a schematic composition diagram of a data transmission apparatus according to an embodiment of this application;
FIG. 14 and FIG. 15 each are a schematic diagram of a hardware structure of a data transmission apparatus according to an embodiment of this application; and
FIG. 16 is a schematic diagram of a hardware structure of a terminal according to an embodiment of this application.

### DESCRIPTION OF EMBODIMENTS

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of' means two or more. Terms such as "first" and "second" do not limit a quantity and an execution sequence, and the terms such as "first" and "second" do not indicate a definite difference.

It should be noted that, in this application, words such as "example" or "for example" are used to represent giving an example, an illustration, or a description. Any embodiment or design solution described by using "example" or "for example" in this application shall not be construed as being more preferred or more advantageous than another embodiment or design solution. Exactly, use of the term such as "example" or "for example" is intended to present a relative concept in a specific manner.

Refer to FIG. 2. Network elements in this application include an access network device and a terminal in a communications system. A method provided in embodiments of this application mainly relates to communication between terminals. A communication link for direct communication between the terminals may be referred to as a sidelink (sidelink, SL) or a sidelink. On the sidelink, a transmit terminal may directly send data to a receive terminal, and does not need to first send the data to an access network device and then send the data to the receive terminal through forwarding by a core network, to greatly reduce a data transmission delay.

The communications system in embodiments of this application includes but is not limited to a long term evolution (long term evolution, LTE) system, a 5th generation (5th generation, 5G) system, a new radio (new radio, NR) system, a wireless local area network (wireless local area network, WLAN) system and a future evolved system, or a plurality of converged communications systems. The 5G system may be a non-standalone (non-standalone, NSA) 5G system or a standalone (standalone, SA) 5G system.

The access network device in embodiments of this application is an entity that is on a network side and that is configured to send a signal, receive a signal, or send a signal and receive a signal. The access network device may be an apparatus that is deployed on a radio access network (radio access network, RAN) and that provides a wireless communication function for a terminal, for example, may be a transmission reception point (transmission reception point, TRP), a base station, or control nodes in various forms (for example, a network controller and a radio controller (for example, a radio controller in a cloud radio access network (cloud radio access network, CRAN) scenario)). Specifically, the access network device may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminals covered by the plurality of base stations. In systems using different radio access technologies, devices that have base station functions may have different names. For example, the device may be referred to as an evolved NodeB (evolved NodeB, eNB or eNodeB) in the LTE system, or may be referred to as a next generation NodeB (next generation NodeB, gNB) in the 5G system or the NR system. A specific name of the base station is not limited in this application. Alternatively, the access network device may be an access network device or the like in a future evolved public land mobile network (public land mobile network, PLMN).

The terminal in embodiments of this application is an entity that is on a user side and that is configured to receive a signal, send a signal, or receive a signal and send a signal. The terminal is configured to provide a user with one or more of a voice service and a data connectivity service. The terminal may also be referred to as user equipment (user equipment, UE), a terminal device, an access terminal, a subscriber unit, a subscriber station, a mobile station, a remote station, a remote terminal, a mobile device, a user terminal, a wireless communications device, a user agent, or a user apparatus. The terminal may be a vehicle to everything (vehicle to everything, V2X) device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal may be a device-to-device (device-to-device, D2D) device, for example, an electricity meter or a water meter. Alternatively, the terminal may be a mobile station (mobile station, MS), a subscriber unit (subscriber unit), an uncrewed aerial vehicle, an internet of things (internet of things, IoT) device, a station (station, ST) in a WLAN, a cellular phone (cellular phone), a smartphone (smartphone), a cordless telephone set, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a computing device, another processing device connected to a wireless modem, a vehicle-mounted device, or a wearable device (which may also be referred to as a wearable intelligent device). Alternatively, the terminal may be a terminal in a next generation communications system, for example, a terminal in a 5G system, a terminal in a future evolved PLMN, or a terminal in an NR system.

The method provided in embodiments of this application is applicable to but is not limited to the following fields: D2D, V2X, unmanned driving (unmanned driving), automated driving (automated driving, ADS), driver assistance (driver assistance, ADAS), intelligent driving (intelligent driving), connected driving (connected driving), intelligent network driving (intelligent network driving), car sharing (car sharing), and the like.

To make embodiments of this application clearer, the following briefly describes concepts and some content that are related to embodiments of this application.

### 1. Beam (beam)

A main problem of high-frequency communication is that energy of a signal sharply decreases as a transmission distance increases, resulting in a short transmission distance of the signal. To overcome this problem, an analog beam technology is used in the high-frequency communication, and a large-scale antenna array is used for weighted processing, so that energy of a signal is concentrated in a small range, to form a signal similar to an optical beam (the signal is referred to as an analog beam, and is briefly referred to as a beam), to increase a transmission distance.

The beam is a communication resource. The beam may be a wide beam, a narrow beam, or a beam of another type. A technology used to form a beam may be a beamforming technology or another technical means. The beamforming technology may be specifically a digital beamforming technology, an analog beamforming technology, or a hybrid beamforming technology. Different beams may be considered as different resources. Same information or different information may be sent by using different beams. Optionally, a plurality of beams having a same communication feature or similar communication features may be considered as one beam.

Beams include a transmit beam and a receive beam. The transmit beam may refer to distribution of signal strength formed in different directions in space after a signal is transmitted by using an antenna, and the receive beam may refer to distribution in which an antenna array enhances or weakens reception of a radio signal in different directions in space.

It should be noted that a beam is not distinguished as a transmit beam or a receive beam. A beam is a transmit beam when being used to send information, and is a receive beam when being used to receive information. Each beam may correspond to one identifier.

Although the analog beam technology is often applied to the high-frequency communication, it should be clarified that in a low-frequency communication scenario, communication quality can also be improved by using the analog beam technology.

### 2. Subchannel

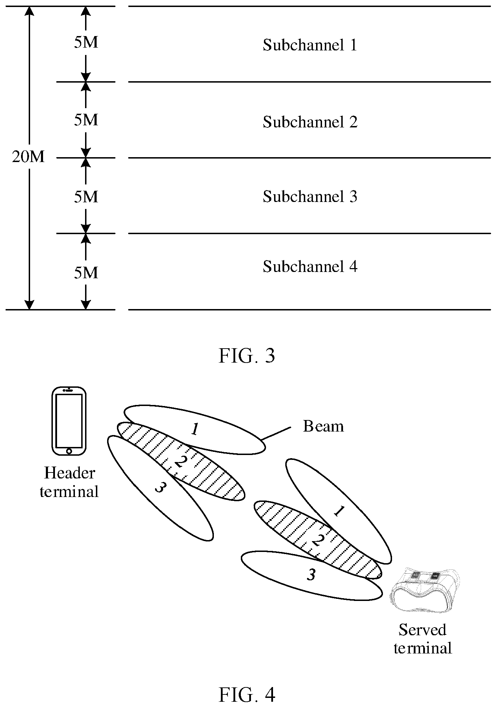

Each resource pool includes one or more subchannels (subchannels). For example, refer to FIG. 3. If a bandwidth occupied by a physical resource in a resource pool is 20M, and 20M is divided into four subchannels, a bandwidth occupied by one subchannel is 5M.

### 3. Physical sidelink control channel (physical sidelink control channel, PSCCH) and physical sidelink shared channel (physical sidelink shared channel, PSSCH)

Both the PSCCH and the PSSCH are channels between terminals. The PSCCH is mainly used to carry control information of sidelink data. The PSSCH is mainly used to carry sidelink data, and may also carry control information. For example, sidelink control information (sidelink control information, SCI) may include two segments. A first segment of the SCI has few bits, and may be carried in the PSCCH. A second segment of the SCI has flexible bits, and may be carried in the PSSCH.

### 4. Sequence interval

The sequence interval is a quantity of bits by which cyclic shift is performed on a sequence. For example, (1, 2, 3, 4) is a sequence, and then a sequence (2, 3, 4, 1) is obtained by performing cyclic shift by 1 bit, and a sequence interval between the two sequences is 1. A larger sequence interval indicates a lower bit error rate.

There are a total of 12 subcarriers on one physical resource block (physical resource block, PRB). Therefore, a maximum of 12 mutually orthogonal sequences may be supported. These sequences are obtained by performing cyclic shift on a base sequence (for example, a sequence of a physical uplink control channel (physical uplink control channel, PUCCH) format (format) 0 or a sequence of a PUCCH format 1). The base sequence may be referred to as a sequence 0, a sequence obtained by shifting x may be referred to as a sequence x, and a number of the sequence x is x.

### 5. Low-frequency resource and high-frequency resource

Currently, 5G spectrum resources may be divided into two frequency ranges (frequency ranges, FRs), which are denoted as an FR 1 and an FR 2.

FR 1: The FR 1 is a sub-6 GHz (sub-6 GHz) frequency band, that is, a low-frequency resource, and is a primary frequency band of 5G. A frequency band lower than 3 GHz may be referred to as a sub-3 GHz frequency band, and a remaining frequency band may be referred to as a frequency band C-band.

FR 2: The FR 2 is a frequency band equal to or higher than 6 GHz (or a frequency band equal to or higher than 6 GHz and lower than 52.6 GHz), that is, a high-frequency resource, is an extended frequency band of 5G, and has abundant spectrum resources.

For example, for frequency ranges respectively corresponding to the FR 1 and the FR 2, refer to Table 1.

**Table 1**

| Frequency range identifier | Corresponding frequency range |
|---|---|
| FR 1 | 450 MHz to 6000 MHz |
| FR 2 | 24250 MHz to 52600 MHz |

The foregoing briefly describes concepts and some content related to embodiments of this application.

In a D2D scenario, if a terminal 1 establishes a connection (for example, a radio resource control (radio resource control, RRC) connection) to an access network device, other terminals (for example, a terminal 2 and a terminal 3) do not establish a connection to the access network device, and the terminal 1 provides a service for the terminal 2 and the terminal 3 (that is, the terminal 1 establishes a D2D connection to the terminal 2 and the terminal 3), the terminal 2 and the terminal 3 may communicate with the access network device or a core network by using the terminal 1. In this case, the terminal 1 may be referred to as a header terminal (header UE) (or a primary terminal), and the other terminals may be referred to as served terminals. For example, if a mobile terminal of a user establishes a connection to an access network device, and an electronic watch, smart glasses, a helmet-mounted display (helmet-mounted display, HMD), and the like of the user do not establish a connection to the access network device but establish a D2D connection to the mobile terminal, the mobile terminal is a header terminal, and the electronic watch, the smart glasses, the HMD, and the like are served terminals.

The header terminal has no limited power, and can access a network and provide a service for the served terminal. The header terminal has some original functions of the access network device in MIMO. For example, the header terminal broadcasts a synchronization signal block (synchronization signal block, SSB) on a sidelink, where the SSB that is broadcast on the sidelink may also be denoted as an SL-SSB. The header terminal may periodically broadcast the SSB, and each SSB may use a different beam, that is, each SSB is transmitted by using a beam, so that terminals at different locations can receive the SSB with high quality. For example, an SSB 1, an SSB 2, and an SSB 3 are sequentially broadcast in each period. The SSB 1, the SSB 2, and the SSB 3 each correspond to one beam. A corresponding access resource is configured for each beam, and another terminal may access the header terminal on the beam by using the access resource. The access resource corresponding to each beam may also be considered as an access resource corresponding to an SSB sent by using the beam. As a served terminal, the served terminal has an original function of a terminal in MIMO, for example, listens on an SSB, determines an access resource location corresponding to the SSB, and sends a signal to the header terminal at the access resource location. For example, the access resource in this embodiment of this application may be a physical random access channel (physical random access channel, PRACH) resource.

The header terminal and the served terminal may communicate with each other by using a beam. The terminal can support only one beam at a same moment. The header terminal may periodically send information (for example, an SSB or data) by using different beams, so that served terminals at different locations can receive the information with high quality. For example, refer to FIG. 4. The header terminal may periodically send information by using a beam 1, a beam 2, and a beam 3, and this period may be referred to as a beam period. Because a beam periodically appears, an access resource corresponding to the beam also periodically appears. If a beam failure recovery manner in an air interface MIMO scenario is still used, the served terminal can feed back a BFRQ on an access resource corresponding to a beam only after the access resource corresponding to the beam appears. For example, refer to FIG. 4. The served terminal can feed back the BFRQ on an access resource corresponding to the beam 2 only after the access resource corresponding to the beam 2 appears. If the access resource just appears, it means that the served terminal can send the BFRQ only after approximately one beam period. Consequently, a delay of sending the BFRQ by the terminal is high, and a beam failure recovery process is excessively long.

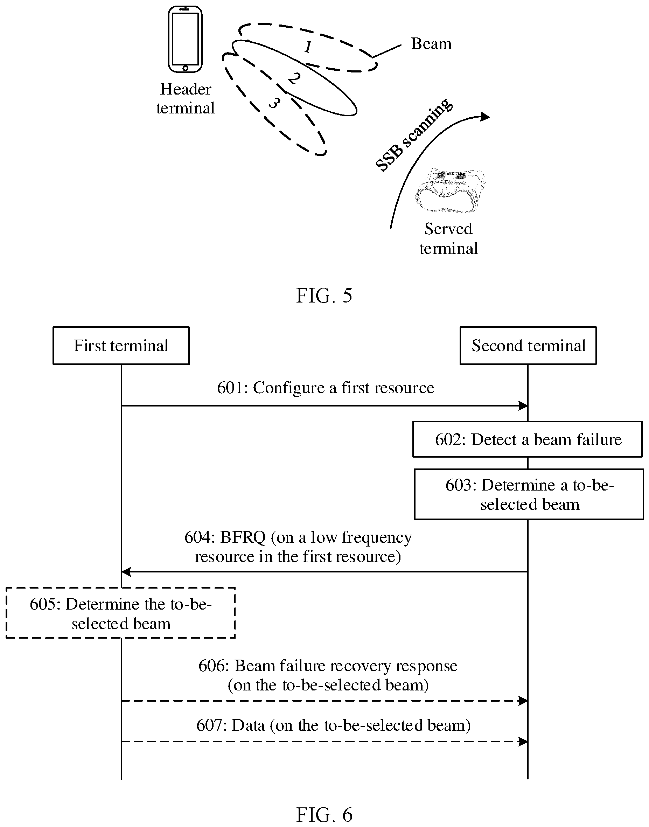

In addition, if a connection between the served terminal and the primary terminal still fails after a plurality of BFRQs, it is determined that a radio link failure (radio link failure, RLF) occurs, and the served terminal starts another beam pairing procedure. Specifically, refer to FIG. 5. The served terminal scans an SSB on a sidelink to find a proper beam, and then performs random access on an access resource corresponding to the SSB. This procedure causes an additional delay.

To resolve the foregoing problem, an embodiment of this application provides a signal transmission method. The method may be applied to a high-frequency MIMO scenario, or may be applied to a low-frequency MIMO scenario. In the method, a low-frequency resource is configured for the served terminal to send a BFRQ, so as to avoid an excessively long beam failure recovery process, and improve beam failure recovery efficiency. Details are described below.

As shown in FIG. 6, the signal transmission method includes step 601 to step 604.

601: A first terminal configures a first resource. Correspondingly, a second terminal receives the first resource configured by the first terminal.

The first terminal may be a header terminal, and the second terminal may be a served terminal.

There are the following two possible cases for the first resource:
Case 1: The first resource includes at least one low-frequency resource.
Case 2: The first resource includes at least one low-frequency resource pool. Each low-frequency resource pool may include one or more low-frequency resources.

Optionally, the first resource is periodically distributed in time domain. The low-frequency resource in the first resource is a physical sidelink feedback channel (physical sidelink feedback channel, PSFCH) resource. The low-frequency resource in the first resource may also be referred to as a feedback resource. The low-frequency resource in the first resource includes a time domain resource and/or a frequency domain resource.

In a specific implementation of step 601, for each low-frequency resource, the first terminal may configure a time domain resource and/or a frequency domain resource corresponding to the low-frequency resource. Specifically, the first terminal may indicate a period of the low-frequency resource, a slot (or a symbol in a slot) in which the low-frequency resource is located in the period, a frequency domain PRB range of the low-frequency resource, and the like. For example, the period of the low-frequency resource may be one slot, two slots, four slots, or the like. A PRACH resource corresponding to a beam also periodically appears, and may be four slots, eight slots, 12 slots, 16 slots, or the like. Usually, the period of the low-frequency resource is shorter than a period of the PRACH resource.

602: The second terminal detects a beam failure.

Specifically, after detecting the beam failure, the second terminal may enable beam failure recovery, to perform step 603.

Optionally, in a specific implementation, step 602 may be implemented in any one of Manner a to Manner d.

Manner a: When the second terminal detects that a quantity of times that PSSCH, PSCCH, or physical sidelink broadcast channel (physical sidelink broadcast channel, PSBCH) transmission fails is greater than or equal to a second threshold, the second terminal determines that the beam failure occurs.

The second threshold may be specified in a protocol, predefined, preset, or determined through negotiation between the first terminal and the second terminal. This is not limited in this application. For example, the second threshold may be 1, 3, 5, or 10.

That a bit error rate of a PDCCH is less than a specific threshold within a specific time range (for example, 10 milliseconds (ms)) may be usually used as a condition for triggering beam failure recovery. Considering that a delay requirement is further improved, and there is an extra delay in calculation of the bit error rate, the trigger condition may be that the quantity of times that PSSCH, PSCCH, or PSBCH transmission fails is greater than or equal to the second threshold. When the second threshold is equal to 1, beam failure recovery is immediately triggered once PSSCH, PSCCH, or PSBCH transmission fails for one time. This avoids an extra delay caused by collecting statistics about a bit error rate of signaling in a period of time, and improves beam failure recovery efficiency.

Manner b: When an RSRP measurement average value/a smoothed value (the smoothed value may also be referred to as a filtering value) of a signal (for example, a PSSCH, a PSCCH, or a PSBCH) received by the second terminal from the first terminal is less than a threshold (for example, -90 decibels relative to one milliwatt (decibels relative to one milliwatt, dBm)) within preset duration, the second terminal determines that the beam failure occurs.

Manner c: When a quantity of times that an RSRP measurement average value/a smoothed value of a signal (for example, a PSSCH, a PSCCH, or a PSBCH) received by the second terminal from the first terminal is less than a threshold is greater than K1 within preset duration, the second terminal determines that the beam failure occurs. K1 is an integer greater than 0. For example, K1 is equal to 5 or 10.

Manner d: When an RSRP measurement average value/a smoothed value of a signal (for example, a PSSCH, a PSCCH, or a PSBCH) received by the second terminal from the first terminal is less than a threshold for K2 consecutive times within preset duration, the second terminal determines that the beam failure occurs. K2 is an integer greater than 0. For example, K2 is equal to 5 or 10.

In Manner b to Manner d, the preset duration and the threshold may be specified in a protocol, predefined, preset, or determined through negotiation between the first terminal and the second terminal. This is not limited in this application. For example, the preset duration may be 5 ms, 10 ms, 100 ms, or the like.

603: The second terminal determines a to-be-selected beam. The to-be-selected beam is a beam for signal transmission between the second terminal and the first terminal.

The second terminal may obtain RSRP of each beam based on an RS corresponding to each beam, and determine the to-be-selected beam based on the RSRP value (for example, determine a beam with a largest RSRP value as the to-be-selected beam).

In a specific implementation of step 603, in a case, after beam failure recovery is enabled, a physical (physical, PHY) layer of the second terminal may directly determine the to-be-selected beam to be fed back to the first terminal.

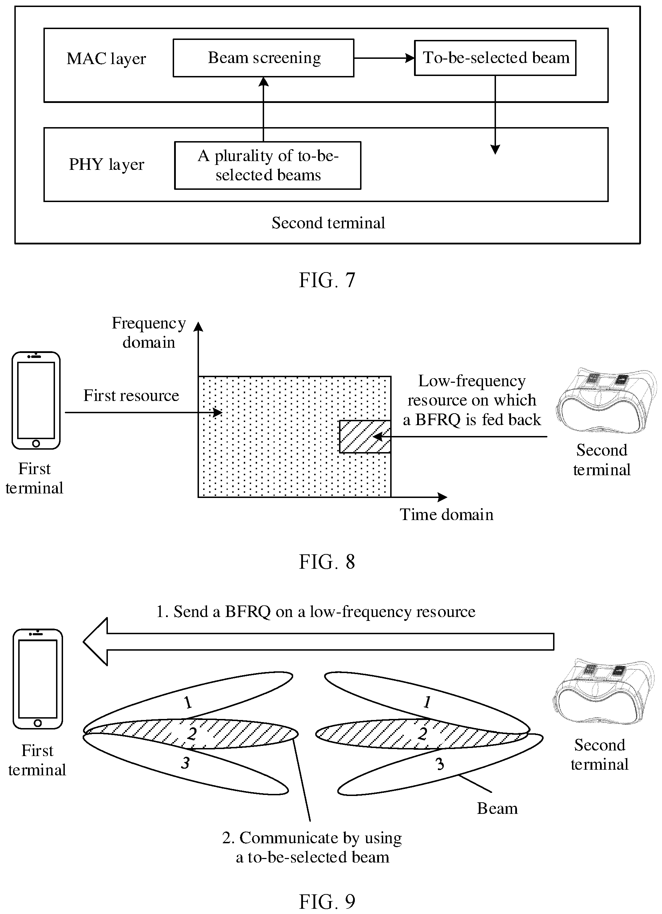

In a specific implementation of step 603, in another case, refer to FIG. 7. The PHY layer of the second terminal may determine a plurality of to-be-selected beams (which may also be considered as one to-be-selected beam group), and submit the plurality of to-be-selected beams to a medium access control (medium access control, MAC) layer. The MAC layer screens the beams, finally determines a to-be-selected beam to be fed back to the first terminal, and sends a beam identifier of the to-be-selected beam to the PHY layer. Certainly, a beam screening process may also be implemented by a higher protocol layer, for example, a radio link control (radio link control, RLC) layer, a packet data convergence protocol (packet data convergence protocol, PDCP) layer, an RRC layer, a service discovery application profile (service discovery application profile, SDAP) layer, or an application (application, APP) layer.

Regardless of the PHY layer, the MAC layer, or the higher protocol layer, the to-be-selected beam may be determined based on an RSRP value of each beam. Certainly, the to-be-selected beam may alternatively be determined based on another parameter. This is not limited in this application.

604: The second terminal sends a BFRQ to the first terminal on a low-frequency resource in the first resource, where the BFRQ is used to request beam failure recovery. Correspondingly, the first terminal receives the BFRQ from the second terminal on a low-frequency resource in the first resource.

After the first terminal configures the first resource for the second terminal, the second terminal may select, from the at least one low-frequency resource (or the at least one low-frequency resource pool), a low-frequency resource with lower interference or a low-frequency resource whose interference is less than a threshold, and then send the BFRQ to the first terminal by using the selected low-frequency resource.

It may be understood that, if the first resource includes only one low-frequency resource, the second terminal does not need to perform selection, and directly sends the BFRQ to the first terminal on the low-frequency resource.

The low-frequency resource on which the beam failure recovery request is sent corresponds to the to-be-selected beam, or the beam failure recovery request includes a beam identifier of the to-be-selected beam, or the beam failure recovery request includes a sequence corresponding to the to-be-selected beam.

For example, refer to FIG. 8. The first terminal configures a first resource for the second terminal, and the second terminal feeds back a BFRQ on a low-frequency resource in the first resource.

The BFRQ may be carried in a PSFCH.

Optionally, as shown in FIG. 6, after step 604, the method further includes step 605 to step 607.

605: The first terminal determines the to-be-selected beam.

In a specific implementation of step 605, the first terminal may determine the to-be-selected beam based on the low-frequency resource on which the BFRQ is sent, the beam identifier that is of the to-be-selected beam and that is in the BFRQ, or the sequence that corresponds to the to-be-selected beam and that is in the BFRQ. For detailed descriptions, refer to the following descriptions.

606: The first terminal sends a beam failure recovery response to the second terminal on the to-be-selected beam. Correspondingly, the second terminal receives the beam failure recovery response from the first terminal on the to-be-selected beam.

The beam failure recovery response is used to indicate that beam failure recovery of the second terminal succeeds.

607: The second terminal data to the first terminal by using the to-be-selected beam. Correspondingly, the first terminal transmits data to the second terminal by using the to-be-selected beam.

For example, refer to FIG. 9. After the second terminal sends a BFRQ on a low-frequency resource, if the first terminal sends a beam failure recovery response to the second terminal on a to-be-selected beam, assuming that the to-be-selected beam is a beam 2, the first terminal and the second terminal subsequently communicate with each other by using the to-be-selected beam (that is, the beam 2).

Optionally, if the first terminal cannot communicate with the second terminal by using the to-be-selected beam (for example, the to-be-selected beam is unavailable or the first terminal does not receive the BFRQ), the first terminal may not send the beam failure recovery response to the second terminal. If the second terminal does not receive the beam failure recovery response from the first terminal in a period of time, the second terminal reselects a low-frequency resource to send the BFRQ. The BFRQ may be the same as or different from the previously sent BFRQ. For example, the second terminal may select another low-frequency resource corresponding to the previously determined to-be-selected beam to resend the BFRQ, or the second terminal may re-determine a to-be-selected beam, and perform beam failure recovery again based on the foregoing procedure.

According to the method provided in this embodiment of this application, when a beam failure occurs on the second terminal, if the first resource includes the at least one low-frequency resource, the second terminal may send the BFRQ by using the low-frequency resource; or if the first resource includes the at least one low-frequency resource pool, the second terminal may select one low-frequency resource from a resource pool in the at least one low-frequency resource pool to send the BFRQ. Because the second terminal sends the BFRQ by using the low-frequency resource, and a beam corresponding to the low-frequency resource is an omnidirectional beam, the first terminal can reliably receive the BFRQ, to improve beam failure recovery efficiency.

In addition, on the one hand, because the second terminal can send the BFRQ to the first terminal in a timely manner, and the beam corresponding to the low-frequency resource is the omnidirectional beam, a time interval at which the BFRQ is sent is short. If a connection between the first terminal and the second terminal still fails after a plurality of BFRQs, a time period from a time point at which the BFRQ is sent for the first time to a time point at which it is determined that a radio link failure occurs is short, so that the second terminal can re-establish the connection to the first terminal in a timely manner, to avoid excessively long service interruption time of the second terminal. On the other hand, because a period of the low-frequency resource is usually shorter than a period of the PRACH resource, compared with the conventional technology in which a BFRQ is sent by using a PRACH resource, the method provided in this application can reduce a beam failure recovery delay and improve beam failure recovery efficiency.

In a specific implementation of step 601, the first terminal may configure the first resource for the second terminal through a unicast connection to the second terminal. The first terminal may configure the first resource by using signaling, for example, by using RRC signaling or dynamic signaling (for example, SCI) between the terminals. The SCI may be carried in a PSCCH or a PSSCH. The first terminal may configure the first resource for the second terminal immediately after the second terminal accesses the first terminal. For example, if the two terminals communicate with each other by using a beam 1 after the second terminal accesses the first terminal, the first terminal may configure the first resource for the second terminal by using the beam 1.

In a specific implementation of step 601, when the first resource includes at least one low-frequency resource pool or a plurality of low-frequency resources, the first terminal may further broadcast resource configuration information used to configure the first resource. Correspondingly, the second terminal receives the resource configuration information that is broadcast by the first terminal and that is used to configure the first resource. In this case, the first terminal may configure the first resource for the second terminal before the second terminal accesses the first terminal. A plurality of second terminals may receive the resource configuration information, and the first resource is shared by the plurality of second terminals. Each second terminal corresponds to a part of the first resource. Specifically, the second terminal may listen on the first resource, and select, from the first resource, a low-frequency resource that corresponds to the second terminal and whose interference is lowest or whose interference is less than a first threshold to send the BFRQ. The first resource is broadcast and is shared by the plurality of second terminals. Therefore, compared with a case in which the first resource is independently configured for each second terminal, this can reduce signaling overheads and save resources.

In a specific implementation of step 601, the first terminal may configure the first resource by using a high-frequency resource, or may configure the first resource by using a low-frequency resource. Descriptions are separately provided below in Manner 1 and Manner 2.

Manner 1: The first terminal configures the first resource by using the high-frequency resource.

In Manner 1, in a specific implementation, step 601 may include: The first terminal configures the first resource for the second terminal on the high-frequency resource. Correspondingly, the second terminal receives, on a high-frequency resource, the first resource configured by the first terminal.

For example, after the first terminal establishes a D2D connection to the second terminal, the first terminal allocates a high-frequency resource for data transmission to the second terminal, to establish data transmission between the first terminal and the second terminal based on the high-frequency resource. After establishing the data transmission, the first terminal may allocate the first resource to the second terminal on the high-frequency resource.

Manner 2: The first terminal configures the first resource by using the low-frequency resource.

In Manner 2, in a specific implementation, step 601 may include: The first terminal obtains an identifier of the second terminal on a high-frequency resource, and sends, to the second terminal on a low-frequency resource, resource configuration information used to configure the first resource, where the resource configuration information includes the identifier of the second terminal. Correspondingly, the second terminal receives, on a low-frequency resource, the resource configuration information that is sent by the first terminal and that is used to configure the first resource.

In Manner 2, after establishing a D2D connection to the second terminal, the first terminal may obtain the identifier of the second terminal on the high-frequency resource. After obtaining the identifier of the second terminal, the first terminal may send the resource configuration information on the low-frequency resource after a beam failure occurs on the second terminal, or may send the resource configuration information on the low frequency before a beam failure occurs on the second terminal. This is not limited in this application.

The low-frequency resource used to configure the first resource may be scheduled by the access network device, or may be determined through negotiation between the first terminal and the second terminal. This is not limited in this application.

The resource configuration information may be carried in a PSSCH or a PSCCH, and may be specifically carried in SCI in the PSSCH or the PSCCH.

To avoid a resource conflict between different second terminals, before step 601, the method further includes: The first terminal obtains the first resource by applying to the access network device. Specifically, the first terminal may request a low-frequency resource from the access network device, and the access network device configures the first resource for the first terminal. The first terminal may obtain, from the access network device when establishing a connection to the access network device, first resources corresponding to a plurality of second terminals, or may obtain, by applying to the access network device when each second terminal establishes a D2D connection to the first terminal, a first resource corresponding to the second terminal.

The first terminal and the access network device may communicate with each other at a low frequency. The first terminal may apply to the access network device for a periodic first resource. In this case, the first resource is periodically distributed in time domain.

It should be noted that, in the optional method, when allocating a resource, the access network device may consider a low-frequency resource used by the access network device and an allocated low-frequency resource, to avoid a conflict between the allocated first resource and the low-frequency resource used by the access network device, and avoid a conflict between low-frequency resources of different second terminals, so as to avoid interference.

Certainly, the first resource may not be applied for by the first terminal from the access network device, but is preset or specified in a protocol. This is not limited in this application.

Optionally, a resource conflict between different second terminals can be avoided in the following two possible implementations.

In a first possible implementation, a plurality of low-frequency resources, one low-frequency resource pool, or a plurality of low-frequency resource pools are allocated to each beam of each second terminal.

In this case, if some low-frequency resources corresponding to a beam are occupied by another terminal, the second terminal may further use another low-frequency resource.

In a second possible implementation, the first terminal periodically (for example, in each slot) sends SCI to the second terminal on a low-frequency resource, where the SCI is used to schedule the first resource. Correspondingly, the second terminal periodically receives the SCI from the first terminal on a low-frequency resource.

In the second possible implementation, the first terminal may send the SCI to the second terminal when the first resource appears. It should be noted that, although the SCI in the second possible implementation is sent to the second terminal, another terminal using a low-frequency resource may also obtain the SCI through parsing. Therefore, in this implementation, the another terminal using the low-frequency resource may learn of occupied low-frequency resources, and subsequently no longer use these low-frequency resources. In this way, when the second terminal sends the BFRQ by using these low-frequency resources, no interference is caused to the another terminal using the low-frequency resource.

Specifically, any other terminal using a low-frequency resource may first detect a PSCCH, determine SCI in the PSCCH, determine, based on the SCI, a resource scheduled by using the SCI (that is, the first resource configured for the second terminal), and subsequently does not send data on the low-frequency resource in the first resource. The first terminal periodically sends the SCI, occupies the first resource, and reserves the first resource for use of the second terminal, to reduce a conflict probability.

In the foregoing embodiment, the first terminal may determine the to-be-selected beam in any one of Manner 1 to Manner 3.

Manner 1: The first terminal determines the to-be-selected beam based on the low-frequency resource on which the BFRQ is sent.

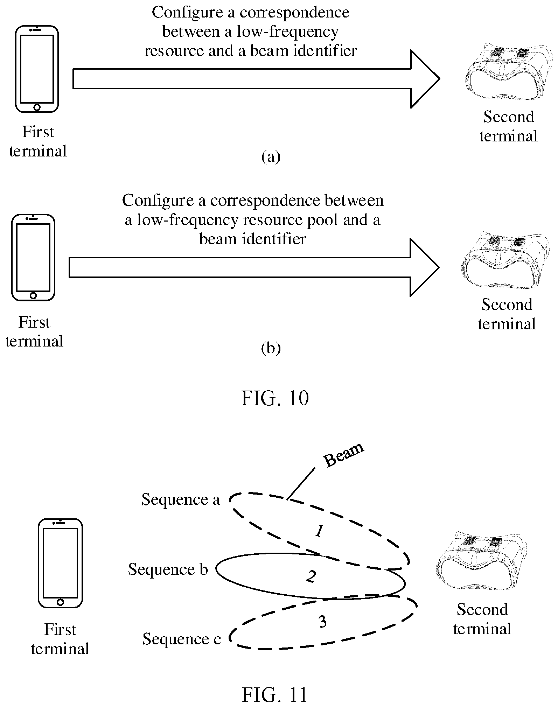

In Manner 1, for Case 1, the first resource further includes a beam identifier corresponding to the at least one low-frequency resource, and each beam identifier corresponds to one or more low-frequency resources in the first resource. In other words, refer to (a) in FIG. 10. The first terminal configures a correspondence between the low-frequency resource and the beam identifier. For example, for a correspondence configured by the first terminal, refer to Table 2.

**Table 2**

| Beam identifier | Low-frequency resource |
|---|---|
| Identifier of a beam 1 | Low-frequency resource 1 |
| | Low-frequency resource 2 |
| | Low-frequency resource 3 |
| Identifier of a beam 2 | Low-frequency resource 4 |
| | Low-frequency resource 5 |

In Manner 1, for Case 2, the first resource further includes a beam identifier corresponding to the at least one low-frequency resource pool, and each beam identifier corresponds to one or more low-frequency resource pools in the first resource. In other words, refer to (b) in FIG. 10. The first terminal configures a correspondence between the low-frequency resource pool and the beam identifier. For example, for a correspondence configured by the first terminal, refer to Table 3.

**Table 3**

| Beam identifier | Low-frequency resource pool |
|---|---|
| Identifier of a beam 1 | Low-frequency resource pool 1 |
| | Low-frequency resource pool 2 |
| Identifier of a beam 2 | Low-frequency resource pool 3 |
| | Low-frequency resource pool 4 |

In Manner 1, for Case 1, in a specific implementation, step 604 may include: The second terminal sends the BFRQ to the first terminal on a low-frequency resource corresponding to the to-be-selected beam.

Further, if the to-be-selected beam corresponds to a plurality of low-frequency resources, in a specific implementation of step 604, the second terminal may determine a low-frequency resource whose interference is lowest or whose interference is less than or equal to a first threshold in the plurality of low-frequency resources corresponding to the to-be-selected beam, and send the BFRQ to the first terminal on the low-frequency resource whose interference is lowest or whose interference is less than or equal to the first threshold.

Correspondingly, in a specific implementation of step 605, the first terminal determines the to-be-selected beam based on a low-frequency resource used by the second terminal to send the BFRQ.

For example, based on the example shown in Table 2, if the second terminal sends the BFRQ by using the low-frequency resource 1, the first terminal may determine, based on the correspondence between the low-frequency resource and the beam identifier, that the to-be-selected beam is the beam 1.

In Manner 1, for Case 2, in a specific implementation, step 604 includes: The second terminal sends the BFRQ to the first terminal on a low-frequency resource in a low-frequency resource pool corresponding to the to-be-selected beam.

Further, in a specific implementation of step 604, the second terminal may determine a low-frequency resource whose interference is lowest or whose interference is less than or equal to a first threshold in a plurality of low-frequency resource pools corresponding to the to-be-selected beam, and send the BFRQ to the first terminal on the low-frequency resource whose interference is lowest or whose interference is less than or equal to the first threshold.

Correspondingly, in a specific implementation of step 605, the first terminal determines the to-be-selected beam based on a low-frequency resource pool to which the low-frequency resource used by the second terminal to send the BFRQ belongs.

For example, based on the example shown in Table 3, if the second terminal sends the BFRQ by using a low-frequency resource in the low-frequency resource pool 1, the first terminal may determine, based on the correspondence between the low-frequency resource pool and the beam identifier, that the to-be-selected beam is the beam 1.

The first threshold in the foregoing embodiment may be specified in a protocol, predefined, preset, or determined through negotiation between the first terminal and the second terminal. This is not limited in this application. For example, the first threshold may be -100 dBm or -90 dBm. The second terminal may determine, through resource scanning or resource listening, a low-frequency resource whose interference is lowest or whose interference is less than or equal to the first threshold. A specific implementation is well known by a person skilled in the art. Details are not described herein.

Manner 2: The first terminal determines the to-be-selected beam based on a beam identifier in the BFRQ.

In Manner 2, the BFRQ includes the beam identifier of the to-be-selected beam. In this case, in a specific implementation of step 604, the second terminal may use the BFRQ to carry the beam identifier of the to-be-selected beam. In a specific implementation, step 605 may include: The first terminal determines the to-be-selected beam based on the beam identifier in the BFRQ.

For example, if the identifier included in the BFRQ is an identifier of a beam 1, the first terminal determines that the beam 1 is the to-be-selected beam.

In Manner 2, optionally, the BFRQ may be carried in SCI in a PSCCH or a PSSCH.

In Manner 2, one beam may correspond to a plurality of low-frequency resources or at least one low-frequency resource pool. In this case, the second terminal may select one low-frequency resource from low-frequency resources or low-frequency resource pools corresponding to the to-be-selected beam to send the BFRQ, for example, select a low-frequency resource whose interference is lowest or whose interference is less than or equal to a first threshold. One beam may correspond to one low-frequency resource. In this case, the second terminal may send the BFRQ on the low-frequency resource corresponding to the to-be-selected beam. Alternatively, a plurality of beams may correspond to one low-frequency resource. In this case, the second terminal sends the BFRQ on the low-frequency resource.

Manner 3: The first terminal determines the to-be-selected beam based on a sequence in the BFRQ.

In Manner 3, there is a correspondence between a beam identifier and a sequence. The correspondence may be configured by the first terminal for the second terminal, may be preset in the second terminal, or may be specified in a protocol. This is not limited in this application. One beam identifier may correspond to one sequence, or may correspond to a plurality of sequences. This is not limited in this application.

For example, for a correspondence between a beam identifier and a sequence, refer to Table 4.

**Table 4**

| Beam identifier | Sequence |
|---|---|
| Identifier of a beam 1 | Sequence 1 |
| | Sequence 2 |
| Identifier of a beam 2 | Sequence 3 |

It should be noted that one PRB may support 12 sequences, and therefore may correspond to a maximum of 12 beam identifiers.

A plurality of beam identifiers of the second terminal may sequentially correspond to sequences whose numbers are in ascending order or in descending order. For example, an identifier of a beam 1 corresponds to a sequence 1, an identifier of a beam 2 corresponds to a sequence 2, an identifier of a beam 3 corresponds to a sequence 3, and by analogy. In this case, refer to FIG. 11. The beam 1 corresponds to a sequence a, the beam 2 corresponds to a sequence b, the beam 3 corresponds to a sequence c, and the sequence a, the sequence b, and the sequence c are respectively the sequence 1, the sequence 2, and the sequence 3.

When a quantity of sequences is greater than a quantity of beams, there may be an interval between the numbers of the sequences corresponding to the plurality of beam identifiers of the second terminal. Optionally, the interval may be [12/Quantity of beams]. For example, an identifier of a beam 1 corresponds to a sequence 0, an identifier of a beam 2 corresponds to a sequence 4, and an identifier of a beam 3 corresponds to a sequence 8. In this case, refer to FIG. 11. The beam 1 corresponds to a sequence a, the beam 2 corresponds to a sequence b, the beam 3 corresponds to a sequence c, and the sequence a, the sequence b, and the sequence c are respectively the sequence 0, the sequence 4, and the sequence 8.

In Manner 3, the BFRQ includes the sequence corresponding to the beam identifier of the to-be-selected beam. In this case, in a specific implementation of step 604, the second terminal may use the BFRQ to carry the sequence corresponding to the beam identifier of the to-be-selected beam. In a specific implementation, step 605 may include: The first terminal determines the to-be-selected beam based on the sequence in the BFRQ. Specifically, the first terminal may determine the beam identifier of the to-be-selected beam based on the sequence in the BFRQ, and then determine the to-be-selected beam based on the beam identifier of the to-be-selected beam.

For example, based on the example shown in Table 4, if the sequence in the BFRQ is the sequence 1, the first terminal determines, based on the correspondence between the beam identifier and the sequence, that the to-be-selected beam is the beam 1.

In Manner 3, one beam may correspond to at least one low-frequency resource or at least one low-frequency resource pool. In this case, the second terminal may select one low-frequency resource from low-frequency resources or low-frequency resource pools corresponding to the to-be-selected beam to send the BFRQ, for example, select a low-frequency resource whose interference is lowest or whose interference is less than or equal to a first threshold. Alternatively, a plurality of beams may correspond to one low-frequency resource. In this case, the second terminal sends the BFRQ on the low-frequency resource.

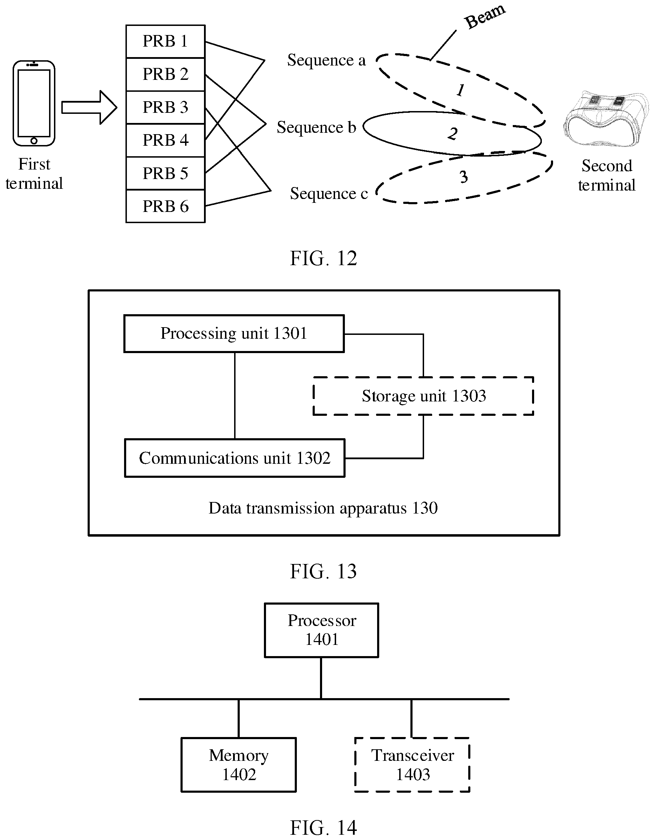

It should be noted that when there is a correspondence between a beam and a low-frequency resource, and there is also a correspondence between a beam and a sequence, the first terminal may determine the to-be-selected beam based on at least one of the two correspondences. For example, refer to Table 5. The first terminal has three beams, six PRBs may be configured to send the BFRQ, and each beam corresponds to two PRBs. In addition, each beam further corresponds to one sequence. For a correspondence between a beam, a PRB, and a sequence, refer to Table 5. In this case, refer to FIG. 12. When receiving the BFRQ, the first terminal may determine the to-be-selected beam based on the PRB used to send the BFRQ, may determine the to-be-selected beam based on the sequence in the BFRQ, or may determine the to-be-selected beam based on both the PRB used to send the BFRQ and the sequence in the BFRQ. This is not limited in this application.

**Table 5**

| Beam identifier | PRB | Sequence |
|---|---|---|
| Identifier of a beam 1 | PRB 1 | Sequence a |
| | PRB 4 | |
| Identifier of a beam 2 | PRB 2 | Sequence b |
| | PRB 5 | |
| Identifier of a beam 3 | PRB 3 | Sequence c |
| | PRB 6 | |

In the foregoing embodiment, if the second terminal needs to select, from the low-frequency resource pool, a low-frequency resource on which the BFRQ is sent, the second terminal may first select, from the low-frequency resource pool, a subchannel whose interference is lowest or whose interference is less than the first threshold, and then select a low-frequency resource from the subchannel to send the BFRQ. This manner can reduce signaling overheads and save resources.

In addition, in the foregoing embodiments of this application, the method provided in embodiments of this application is described by using an example in which the provided method is applied to two terminals. In an actual implementation, the method may be further applied to a beam failure recovery process between the access network device and the terminal. A specific process is similar to the foregoing process. Details are not described again.

The foregoing mainly describes the solutions in embodiments of this application from a perspective of interaction between network elements. It may be understood that to implement the foregoing functions, the network elements such as the first terminal and the second terminal each include at least one of a corresponding hardware structure and/or software module for performing the functions. A person skilled in the art should be easily aware that, units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first terminal and the second terminal each may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example and is merely logical function division, and may be other division in an actual implementation.

When an integrated unit is used, FIG. 13 is a possible schematic diagram of a structure of the data transmission apparatus (denoted as a data transmission apparatus 130) in the foregoing embodiments. The data transmission apparatus 130 includes a processing unit 1301 and a communications unit 1302, and may further include a storage unit 1303. The schematic diagram of the structure shown in FIG. 13 may be used to show structures of the first terminal and the second terminal in the foregoing embodiments.

When the schematic diagram of the structure shown in FIG. 13 is used to show the structure of the first terminal in the foregoing embodiment, the processing unit 1301 is configured to: control and manage an action of the first terminal. For example, the processing unit 1301 is configured to support the first terminal in performing steps 601 and 604 to 607 in FIG. 6, and some or all of actions performed by the first terminal in another process described in this embodiment of this application. The processing unit 1301 may communicate with another network entity through the communications unit 1302, for example, communicate with the second terminal shown in FIG. 6. The storage unit 1303 is configured to store program code and data that are of the first terminal. The data transmission apparatus 130 may be a first terminal, or may be a chip in the first terminal.

When the schematic diagram of the structure shown in FIG. 13 is used to show the structure of the second terminal in the foregoing embodiment, the processing unit 1301 is configured to: control and manage an action of the second terminal. For example, the processing unit 1301 is configured to support the second terminal in performing steps 601 to 604 and 606 and 607 in FIG. 6, and some or all of actions performed by the second terminal in another process described in this embodiment of this application. The processing unit 1301 may communicate with another network entity through the communications unit 1302, for example, communicate with the first terminal shown in FIG. 6. The storage unit 1303 is configured to store program code and data that are of the second terminal. The data transmission apparatus 130 may be a second terminal, or may be a chip in the second terminal.

When the data transmission apparatus 130 is the first terminal or the second terminal, the processing unit 1301 may be a processor or a controller, and the communications unit 1302 may be a communications interface, a transceiver, a transceiver machine, a transceiver circuit, a transceiver apparatus, or the like. The communications interface is a collective term, and may include one or more interfaces. The storage unit 1303 may be a memory. When the data transmission apparatus 130 is the chip in the first terminal or the second terminal, the processing unit 1301 may be a processor or a controller, and the communications unit 1302 may be an input interface and/or an output interface, a pin, a circuit, or the like. The storage unit 1303 may be a storage unit (for example, a register or a cache) in the chip, or may be a storage unit (for example, a read-only memory or a random access memory) that is in the first terminal or the second terminal and that is located outside the chip.

The communications unit may also be referred to as a transceiver unit. An antenna and a control circuit that have receiving and sending functions in the data transmission apparatus 130 may be considered as the communications unit 1302 in the data transmission apparatus 130, and a processor that has a processing function in the data transmission apparatus 130 may be considered as the processing unit 1301 in the data transmission apparatus 130. Optionally, a component configured to implement a receiving function in the communications unit 1302 may be considered as a receiving unit. The receiving unit is configured to perform a receiving step in embodiments of this application. For example, the receiving unit in the first terminal may be configured to receive a BFRQ, and the receiving unit in the second terminal may be configured to receive a first resource, a beam failure recovery response, data, and the like. The receiving unit may be a receiver machine, a receiver, a receiver circuit, or the like. A component configured to implement a sending function in the communications unit 1302 may be considered as a sending unit. The sending unit is configured to perform a sending step in embodiments of this application. For example, the sending unit in the second terminal may be configured to send a BFRQ, and the sending unit in the first terminal may be configured to send a first resource, a beam failure recovery response, data, and the like. The sending unit may be a transmitter machine, a transmitter, a transmitter circuit, or the like.

When an integrated unit in FIG. 13 is implemented in a form of a software functional module and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the method in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

The unit in FIG. 13 may also be referred to as a module. For example, the processing unit may be referred to as a processing module.

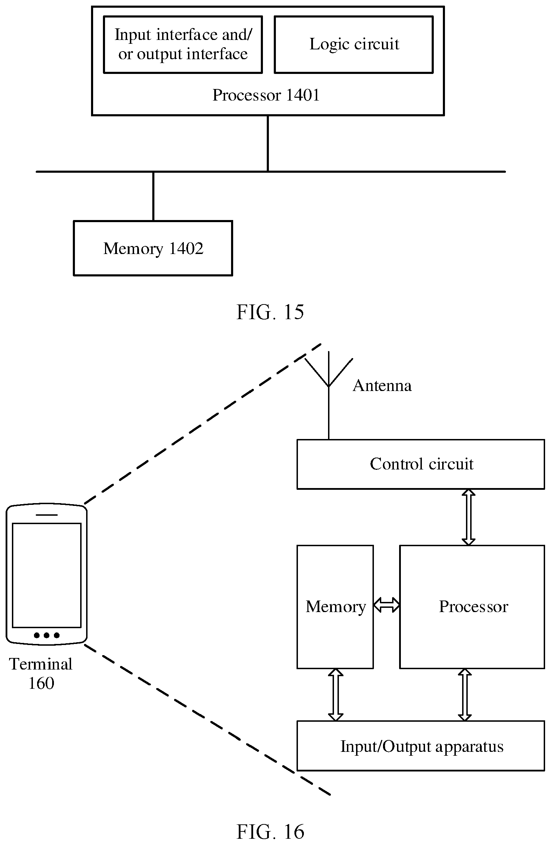

An embodiment of this application further provides a schematic diagram of a hardware structure of a data transmission apparatus. Refer to FIG. 14 or FIG. 15. The data transmission apparatus includes a processor 1401. Optionally, the data transmission apparatus further includes a memory 1402 connected to the processor 1401.

The processor 1401 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 1401 may alternatively include a plurality of CPUs, and the processor 1401 may be a single-core (single-CPU) processor or a multi-core (multi-CPU) processor. The processor herein may refer to one or more devices, circuits, or processing cores configured to process data (for example, computer program instructions).

The memory 1402 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 1402 is not limited in this embodiment of this application. The memory 1402 may exist independently, or may be integrated into the processor 1401. The memory 1402 may include computer program code. The processor 1401 is configured to execute the computer program code stored in the memory 1402, to implement the method provided in embodiments of this application.

In a first possible implementation, as shown in FIG. 14, the data transmission apparatus further includes a transceiver 1403. The processor 1401, the memory 1402, and the transceiver 1403 are connected through a bus. The transceiver 1403 is configured to communicate with another device or a communications network. Optionally, the transceiver 1403 may include a transmitter and a receiver. A component configured to implement a receiving function in the transceiver 1403 may be considered as a receiver. The receiver is configured to perform a receiving step in embodiments of this application. For example, a receiver in the first terminal may be configured to receive a BFRQ, and a receiver in the second terminal may be configured to receive a first resource, a beam failure recovery response, data, and the like. A component configured to implement a sending function in the transceiver 1403 may be considered as a transmitter. The transmitter is configured to perform a sending step in embodiments of this application. For example, a transmitter in the second terminal may be configured to send a BFRQ, and the transmitter in the first terminal may be configured to send a first resource, a beam failure recovery response, data, and the like.

Based on the first possible implementation, the schematic diagram of the structure shown in FIG. 14 may be used to show a structure of the first terminal or the second terminal in the foregoing embodiments.

When the schematic diagram of the structure shown in FIG. 14 is used to show the structure of the first terminal in the foregoing embodiment, the processor 1401 is configured to: control and manage an action of the first terminal. For example, the processor 1401 is configured to support the first terminal in performing steps 601 and 604 to 607 in FIG. 6, and some or all of actions performed by the first terminal in another process described in this embodiment of this application. The processor 1401 may communicate with another network entity through the transceiver 1403, for example, communicate with the second terminal shown in FIG. 6. The memory 1402 is configured to store program code and data that are of the first terminal.

When the schematic diagram of the structure shown in FIG. 14 is used to show the structure of the second terminal in the foregoing embodiment, the processor 1401 is configured to: control and manage an action of the second terminal. For example, the processor 1401 is configured to support the second terminal in performing steps 601 to 604 and 606 and 607 in FIG. 6, and some or all of actions performed by the second terminal in another process described in this embodiment of this application. The processor 1401 may communicate with another network entity through the transceiver 1403, for example, communicate with the first terminal shown in FIG. 6. The memory 1402 is configured to store program code and data that are of the second terminal.

In a second possible implementation, the processor 1401 includes a logic circuit and an input interface and/or an output interface. The output interface is configured to perform a sending action in a corresponding method. For example, an output interface in the second terminal may be configured to send a BFRQ, and an output interface in the first terminal may be configured to send a first resource, a beam failure recovery response, data, and the like. The input interface is configured to perform a receiving action in a corresponding method. For example, an input interface in the first terminal may be configured to receive a BFRQ, and an input interface in the second terminal may be configured to receive a first resource, a beam failure recovery response, data, and the like.

Based on the second possible implementation, the schematic diagram of the structure shown in FIG. 15 may be used to show a structure of the first terminal or the second terminal in the foregoing embodiments.

When the schematic diagram of the structure shown in FIG. 15 is used to show the structure of the first terminal in the foregoing embodiment, the processor 1401 is configured to: control and manage an action of the first terminal. For example, the processor 1401 is configured to support the first terminal in performing steps 601 and 604 to 607 in FIG. 6, and some or all of actions performed by the first terminal in another process described in this embodiment of this application. The processor 1401 may communicate with another network entity through at least one of the input interface and the output interface, for example, communicate with the second terminal shown in FIG. 6. The memory 1402 is configured to store program code and data that are of the first terminal.

When the schematic diagram of the structure shown in FIG. 15 is used to show the structure of the second terminal in the foregoing embodiment, the processor 1401 is configured to: control and manage an action of the second terminal. For example, the processor 1401 is configured to support the second terminal in performing steps 601 to 604 and 606 and 607 in FIG. 6, and some or all of actions performed by the second terminal in another process described in this embodiment of this application. The processor 1401 may communicate with another network entity through at least one of the input interface and the output interface, for example, communicate with the first terminal shown in FIG. 6. The memory 1402 is configured to store program code and data that are of the second terminal.

In addition, an embodiment of this application further provides a schematic diagram of a hardware structure of a terminal (denoted as a terminal 160). For details, refer to FIG. 16.

FIG. 16 is a schematic diagram of a hardware structure of the terminal 160. For ease of description, FIG. 16 shows only main components of the terminal. As shown in FIG. 16, the terminal 160 includes a processor, a memory, a control circuit, an antenna, and an input/output apparatus.

The processor is mainly configured to: process a communications protocol and communication data, control the entire terminal, execute a software program, and process data of the software program. For example, the processor is configured to control the terminal to perform steps 601 and 604 to 607 in FIG. 6 (in this case, the terminal 160 is a first terminal), 601 to 604 and 606 and 607 in FIG. 6 (in this case, the terminal 160 is a second terminal), and some or all of actions performed by the terminal in another process described in this embodiment of this application. The memory is mainly configured to store the software program and data. The control circuit (which may also be referred to as a radio frequency circuit) is mainly configured to: perform conversion between a baseband signal and a radio frequency signal, and process the radio frequency signal. The control circuit and the antenna together may also be referred to as a transceiver, and are mainly configured to: receive and send a radio frequency signal in a form of an electromagnetic wave. The input/output apparatus such as a touchscreen, a display, or a keyboard is mainly configured to: receive data that is input by a user and output data to the user.

After the terminal is powered on, the processor can read the software program in the memory, interpret and execute instructions of the software program, and process the data of the software program. When the processor needs to send data (for example, a BFRQ) through the antenna, after performing baseband processing on the to-be-sent data, the processor outputs a baseband signal to the control circuit in the control circuit; and the control circuit performs radio frequency processing on the baseband signal and then sends the radio frequency signal to the outside in a form of an electromagnetic wave through the antenna. When data is sent to the terminal, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 16 shows only one memory and one processor. Actually, the terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process a communications protocol and communication data. The central processing unit is mainly configured to: control the entire terminal, execute a software program, and process data of the software program. Functions of the baseband processor and the central processing unit are integrated into the processor in FIG. 16. A person skilled in the art may understand that the baseband processor and the central processing unit each may be an independent processor, and are interconnected by using technologies such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. A function of processing the communications protocol and the communication data may be built in the processor, or may be stored in the memory in a form of a software program. The processor executes the software program to implement a baseband processing function.

In an implementation process, the steps of the methods in embodiments may be completed by using a hardware integrated logic circuit in the processor, or by using instructions in a form of software. The steps of the method disclosed with reference to embodiments of this application may be directly performed by a hardware processor, or may be performed by using a combination of hardware in the processor and a software module. For other descriptions about the processor in FIG. 16, refer to the descriptions related to the processor in FIG. 14 and FIG. 15. Details are not described again.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communications system, including the foregoing first terminal and the foregoing second terminal. Optionally, the communications system further includes an access network device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of'. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to this application without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A signal transmission method, comprising:
configuring, by a first terminal, a first resource, wherein the first resource comprises at least one low-frequency resource or at least one low-frequency resource pool; and
receiving, by the first terminal, a beam failure recovery request from a second terminal on a low-frequency resource in the first resource, wherein the beam failure recovery request is used to request beam failure recovery.

2. The method according to claim 1, wherein when the first resource comprises the at least one low-frequency resource, the first resource further comprises a beam identifier corresponding to the at least one low-frequency resource, and each beam identifier corresponds to one or more low-frequency resources in the first resource; or when the first resource comprises the at least one low-frequency resource pool, the first resource further comprises a beam identifier corresponding to the at least one low-frequency resource pool, and each beam identifier corresponds to one or more low-frequency resource pools in the first resource.

3. The method according to claim 2, wherein the method further comprises:
when the first resource comprises the at least one low-frequency resource, determining, by the first terminal, a to-be-selected beam based on the low-frequency resource used by the second terminal to send the beam failure recovery request, wherein the to-be-selected beam is a beam for signal transmission between the second terminal and the first terminal; or
when the first resource comprises the at least one low-frequency resource pool, determining, by the first terminal, a to-be-selected beam based on a low-frequency resource pool to which the low-frequency resource used by the second terminal to send the beam failure recovery request belongs, wherein the to-be-selected beam is a beam for signal transmission between the second terminal and the first terminal.

4. The method according to claim 1, wherein the beam failure recovery request comprises a beam identifier of a to-be-selected beam, and the to-be-selected beam is a beam for signal transmission between the second terminal and the first terminal; and the method further comprises:
determining, by the first terminal, the to-be-selected beam based on the beam identifier in the beam failure recovery request.

5. The method according to claim 1, wherein the beam failure recovery request comprises a sequence corresponding to a beam identifier of a to-be-selected beam, and the to-be-selected beam is a beam for signal transmission between the second terminal and the first terminal; and the method further comprises:
determining, by the first terminal, the to-be-selected beam based on the sequence in the beam failure recovery request.

6. The method according to any one of claims 3 to 5, wherein the method further comprises:
sending, by the first terminal, a beam failure recovery response to the second terminal on the to -be-selected beam; and
transmitting, by the first terminal, data to the second terminal by using the to-be-selected beam.

7. The method according to any one of claims 1 to 6, wherein the configuring, by a first terminal, a first resource comprises:
broadcasting, by the first terminal, resource configuration information used to configure the first resource; or
configuring, by the first terminal, the first resource for the second terminal by using signaling, wherein the signaling is radio resource control RRC signaling or sidelink control information SCI.

8. The method according to any one of claims 1 to 7, wherein the method further comprises:
obtaining, by the first terminal, the first resource by applying to an access network device.

9. The method according to any one of claims 1 to 8, wherein the first resource is periodically distributed in time domain.

10. The method according to any one of claims 1 to 9, wherein the configuring, by a first terminal, a first resource comprises:
configuring, by the first terminal, the first resource for the second terminal on a high-frequency resource; or
obtaining, by the first terminal, an identifier of the second terminal on a high-frequency resource, and sending, to the second terminal on a low-frequency resource, the resource configuration information used to configure the first resource, wherein the resource configuration information comprises the identifier of the second terminal; or
periodically sending, by the first terminal, SCI to the second terminal on a low-frequency resource, wherein the SCI is used to schedule the first resource.

11. A signal transmission method, comprising:
receiving, by a second terminal, a first resource configured by a first terminal, wherein the first resource comprises at least one low-frequency resource or at least one low-frequency resource pool;
detecting, by the second terminal, a beam failure;
determining, by the second terminal, a to-be-selected beam, wherein the to-be-selected beam is a beam for signal transmission between the second terminal and the first terminal; and
sending, by the second terminal, a beam failure recovery request to the first terminal on a low-frequency resource in the first resource, wherein the beam failure recovery request is used to request beam failure recovery.

12. The method according to claim 11, wherein when the first resource comprises the at least one low-frequency resource, the first resource further comprises a beam identifier corresponding to the at least one low-frequency resource, and each beam identifier corresponds to one or more low-frequency resources in the first resource; or when the first resource comprises the at least one low-frequency resource pool, the first resource further comprises a beam identifier corresponding to the at least one low-frequency resource pool, and each beam identifier corresponds to one or more low-frequency resource pools in the first resource.

13. The method according to claim 12, wherein when the first resource comprises the at least one low-frequency resource, the sending, by the second terminal, a beam failure recovery request to the first terminal on a low-frequency resource in the first resource comprises:
sending, by the second terminal, the beam failure recovery request to the first terminal on a low-frequency resource corresponding to the to-be-selected beam.

14. The method according to claim 12, wherein when the first resource comprises the at least one low-frequency resource and the to-be-selected beam corresponds to a plurality of low-frequency resources, the sending, by the second terminal, a beam failure recovery request to the first terminal on a low-frequency resource in the first resource comprises:
determining, by the second terminal, a low-frequency resource whose interference is lowest or whose interference is less than or equal to a first threshold in the plurality of low-frequency resources corresponding to the to-be-selected beam; and
sending, by the second terminal, the beam failure recovery request to the first terminal on the low frequency resource whose interference is lowest or whose interference is less than or equal to the first threshold.

15. The method according to claim 12, wherein when the first resource comprises the at least one low-frequency resource pool, the sending, by the second terminal, a beam failure recovery request to the first terminal on a low-frequency resource in the first resource comprises:
sending, by the second terminal, the beam failure recovery request to the first terminal on a low-frequency resource in a low-frequency resource pool corresponding to the to-be-selected beam.

16. The method according to claim 12, wherein when the first resource comprises the at least one low-frequency resource pool, the sending, by the second terminal, a beam failure recovery request to the first terminal on a low-frequency resource in the first resource comprises:
determining, by the second terminal, a low-frequency resource whose interference is lowest or whose interference is less than or equal to a first threshold in a plurality of low-frequency resource pools corresponding to the to-be-selected beam; and
sending, by the second terminal, the beam failure recovery request to the first terminal on the low frequency resource whose interference is lowest or whose interference is less than or equal to the first threshold.

17. The method according to claim 11, wherein the beam failure recovery request comprises a beam identifier of the to-be-selected beam.

18. The method according to claim 11, wherein the beam failure recovery request comprises a sequence corresponding to a beam identifier of the to-be-selected beam.

19. The method according to any one of claims 11 to 18, wherein the receiving, by a second terminal, a first resource configured by a first terminal comprises:
receiving, by the second terminal, resource configuration information that is broadcast by the first terminal and that is used to configure the first resource; or
receiving, by the second terminal, the configured first resource from the first terminal by using signaling, wherein the signaling is radio resource control RRC signaling or sidelink control information SCI.

20. The method according to any one of claims 11 to 19, wherein the method further comprises:
receiving, by the second terminal, a beam failure recovery response from the first terminal on the to-be-selected beam; and
transmitting, by the second terminal, data to the first terminal by using the to-be-selected beam.

21. The method according to any one of claims 11 to 19, wherein the method further comprises:
if the second terminal does not receive a beam failure recovery response from the first terminal, reselecting, by the second terminal, a low-frequency resource to send the beam failure recovery request.

22. The method according to any one of claims 11 to 21, wherein the first resource is periodically distributed in time domain.

23. The method according to any one of claims 11 to 22, wherein the receiving, by a second terminal, a first resource configured by a first terminal comprises:
receiving, by the second terminal on a high-frequency resource, the first resource configured by the first terminal; or
receiving, by the second terminal on a low-frequency resource, the resource configuration information that is sent by the first terminal and that is used to configure the first resource, wherein the resource configuration information comprises an identifier of the second terminal; or
periodically receiving, by the second terminal, SCI from the first terminal on a low-frequency resource, wherein the SCI is used to schedule the first resource.

24. The method according to any one of claims 11 to 23, wherein the detecting, by the second terminal, a beam failure comprises:
when the second terminal detects that a quantity of times that physical sidelink shared channel PSSCH, physical sidelink control channel PSCCH, or physical sidelink broadcast channel PSBCH transmission fails is greater than or equal to a second threshold, determining, by the second terminal, that the beam failure occurs.

25. A signal transmission apparatus, wherein the signal transmission apparatus comprises a processor; and
the processor is coupled to a memory, the memory is configured to store computer-executable instructions, and the processor executes the computer-executable instructions stored in the memory, so that the signal transmission apparatus implements the signal transmission method according to any one of claims 1 to 10.

26. A signal transmission apparatus, wherein the signal transmission apparatus comprises a processor; and
the processor is coupled to a memory, and the memory is configured to store computer-executable instructions, so that the signal transmission apparatus implements the signal transmission method according to any one of claims 11 to 24.

27. A chip, comprising a processor and an interface, wherein the processor is coupled to a memory through the interface, and when the processor executes a computer program or instructions in the memory, a signal transmission apparatus is enabled to implement the signal transmission method according to any one of claims 1 to 10 or the signal transmission method according to any one of claims 11 to 24.

28. A computer-readable storage medium, comprising instructions, wherein when the instructions are run on a computer, the computer is enabled to perform the signal transmission method according to any one of claims 1 to 10 or the signal transmission method according to any one of claims 11 to 24.
